# EUROPÄISCHE PATENTSCHRIFT

(11) **EP 0 717 815 B1**
(45) Veröffentlichungstag und Bekanntmachung des Hinweises auf die Patenterteilung: **22.09.1999**
(21) Anmeldenummer: 94926904.7
(22) Anmeldetag: 29.08.1994
(51) Int. Cl.: F02D 9/10

(54) **DROSSELEINRICHTUNG**
THROTTLE DEVICE
DISPOSITIF D'ETRANGLEMENT

(30) Priorität: 02.09.1993 DE 4329527
(43) Veröffentlichungstag der Anmeldung: 26.06.1996
(73) Patentinhaber: FILTERWERK MANN & HUMMEL GmbH, 71638 Ludwigsburg (DE)
(72) Erfinder: ALTMANN, Otto, D-85614 Kirchseeon (DE); BRENNER, Gerhard, D-71679 Asperg (DE)
(74) Vertreter: Voth, Gerhard, Dipl.-Ing.
(86) Internationale Anmeldenummer: EP9402853
(87) Internationale Veröffentlichungsnummer: WO9506808

(56) Entgegenhaltungen:
- WO-A-91/13245
- DE-A- 2 002 444
- DE-A- 2 019 886
- DE-A- 2 050 460
- DE-A- 2 314 958
- GB-A- 1 061 651

## Beschreibung

Die Erfindung betrifft eine Drosseleinrichtung nach dem Oberbegriff des Hauptanspruchs.

Eine Drosselklappe ist beispielsweise aus der EP 0 498 933 Al bekannt. Diese ist in ein Gehäuse integriert, welches an einem Trägerkörper befestigt werden kann. Das Gehäuse ist nach Art eines Drosselklappenstutzens ausgebildet, das heißt, der Stutzen ist einerseits an dem Trägerkörper und andererseits an der Sauganlage einer Brennkraftmaschine befestigt.

Ein Nachteil dieser Drosselklappenbefestigung ist darin zu sehen, daß eine größere Anzahl von Bauelementen erforderlich ist sowie eine größere Anzahl von Abdichtelementen zwischen den einzelnen Bauteilen nötig wird.

Es ist weiterhin aus der WO 91 05 152 eine Drosseleinrichtung zum Reduzieren der Gaswechselverluste bei einer Brennkraftmaschine bekannt. Auch diese Drosseleinrichtung ist ein separates Bauteil, welches einerseits an den Ansaugtrakt eines Motors und andererseits an ein luftführendes System angeschlossen werden muß.

Aus der GB 1 061 651 ist eine Drosselklappe für eine Brennkraftmaschine bekannt. Diese besteht aus einer Drosselklappenwelle, auf welche eine Klappe aufgesteckt ist. Der Nachteil dieser Drosselklappe besteht darin, daß diese eine sehr hohe Leckluftrate aufweist. Insbesondere bei modernen Brennkraftmaschinen ist es erforderlich, die Leckluftrate so gering wie möglich zu halten. Dies ist mit der aus dem Stand der Technik bekannten Drosselklappe nicht möglich.

Die DE-A-2 050 460 beschreibt ein spezielles Regelverfahren für die Kraftstoff/Luftgemischregelung, bei welcher die Drosselung der Brennkraftmaschine durch die Reduzierung des Kraftstoffs bis zu einem geringen Grenzwert erfolgt und im unteren Teillastbereich der Maschine bis hin zur Leerlauflast der Kraftstoff im jeweiligen Verdichtungshub verspätet zur Einspritzung kommt. Zur Frischluftdrosselung ist eine Drosselklappe vorgesehen, die aufgrund ihrer konstruktiven Ausgestaltung eine hohe Leckluftrate aufweist. Außerdem ist die Drosselklappe in üblicher Weise aus Einzelkomponenten aufgebaut und in einem Drosselklappenstutzen montiert.

Im Zuge der erforderlichen Reduzierung von Bauteilen zur Kosteneinsparung und der Optimierung sowie Gewichtsreduzierung im Fahrzeug- und Automobilbau ist das Bestreben zu erkennen, Komplettsysteme herzustellen, die dieses Ziel verwirklichen.

Der Erfindung liegt deshalb die Aufgabe zugrunde, eine Drosseleinrichtung zu schaffen, die kostensparend hergestellt werden kann und auch in moderne Ansaugsysteme zu integrieren ist.

Diese Aufgabe wird ausgehend vom Oberbegriff des Hauptanspruchs durch dessen kennzeichnende Merkmale gelöst.

Ein wesentlicher Vorteil der Erfindung ist darin zu sehen, daß die konsequente Anwendung von Kunststoff im Bereich des Ansaugtrakts einer Brennkraftmaschine weitgehend berücksichtigt ist sowie eine optimale Abdichtung Zwischen Drosselklappenstutzen und Drosselklappe erzielt wird.

Kunststoffstrukturen bedingen spezielle Bauweisen. Probleme, wie Schwingung und Verzug, Anisotropie, Konditionierungszustände und andere, müssen konstruktiv berücksichtigt werden.

Außerdem hat Kunststoff weitere interessante Eigenschaften, so z.B. Korrosionsbeständigkeit, die hohe mechanische Dämpfung, einen äußerst geringen Reibungskoeffizienten, geringerer Verschleiß, niedriges spezifisches Gewicht, gute Verarbeitbarkeit und niedrige Fertigteilkosten bei Massenfertigungen. Besonders die letztgenannte Eignung der Kunststoffe zur kostengünstigen Endfertigung, die am bestechendsten beim Spritzgießen kompliziert gestalteter Teile auffällt, macht sie im Vergleich zu anderen Werkstoffen überlegen.

Bisher bekannte Drosselklappen bzw. Drosseleinrichtungen waren überlicherweise in Metall, vorzugsweise in Aluminium ausgeführt und zwischen einen Kunststoffluftfilter und einem Kunststoffsaugrohr angeordnet. Durch die Integration der Drosselklappe in eines dieser beiden Systeme und durch die konsequente Anwendung von Kunststoff wird eine wesentliche Gewichts- und Kostenreduzierung erzielt.

Gemäß einer vorteilhaften Ausgestaltungder Erfindung ist vorgesehen, die Dichtfläche drosselklappenseitig mit einem Elastomer zu versehen. Dieses Elastomer kann in die Drosselklappe integriert werden. Ein bekanntes Herstellverfahren hierzu ist das Zweikomponentenspritzgießverfahren, bei dem zunächst die Drosselklappe aus Kunststoff hergestellt wird und in einem zweiten Arbeitsgang innerhalb des gleichen Werkzeugs die Elastomerdichtung in einen sich öffnenden Kanal eingespritzt wird. Es ist aber auch möglich, Elastomerformteile nachträglich zu montieren. Diese Art von Abdichtung berücksichtigt die kunststoffspezifischen Gegebenheiten und reduziert die Leckluftraten erheblich.

Eine weitere vorteilhafte Ausgestaltung der Erfindung liegt in der Zweiteilung der Drosselklappenwelle. Zweigeteilte Drosselklappenwellen sind besonders einfach montierbar und haben den Vorteil, daß jedes Wellenteil mit bestimmten Komponenten, z.B. Sensoren oder Stellglieder ausgerüstet werden kann und bei einer Montage lediglich diese beiden vormontierten Elemente an das Gehäuse adaptiert werden.

Der Vorteil dieser Idee liegt vor allem in der erhöhten Flexibilität für verschiedene Regel- und Steuerelemente und in der wartungsfreundlichen Bauweise. Einzelne Elemente können kostengünstig repariert oder ausgetauscht werden.

Eine weitere Ausgestaltung der Drosseleinrichtung sieht vor, die Relaxation durch Temperieren vorzunehmen. Das Temperieren wird in der Nullstellung, d.h. in der Stellung vorgenommen, in welcher die Drosselklappe an dem Drosselklappenstutzen bzw. der Dichtschulter des Drosselklappenstutzens anliegt.

Dieser Relaxationsvorgang bewirkt ein Kriechen oder Fließen des Kunststoffes der Drosselklappe und damit ein Anpassen dieser Drosselklappe an die Drosselstutzenform. Der Vorgang wird unterbrochen sobald die Drosselklappe ihre optimale Form erreicht hat, d.h., sobald das Dichtungsverhalten dem vorgegebenen Wert entspricht.

Die Drosselklappe ist in einer Ausgestaltung der Erfindung mittels der 2-K-Kunststoffspritzgießtechnik hergestellt. Bei dieser Spritzgießtechnik wird zunächst in einem Werkzeug der Kern des Spritzgießteils gegossen. Anschließend entstehen durch Zurückfahren von Schiebern Kapazitäten, die in einem zweiten Arbeitsschritt im gleichen Werkzeug ausgegossen werden.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Ausführungsbseispielennäher erläutert. Es zeigt:

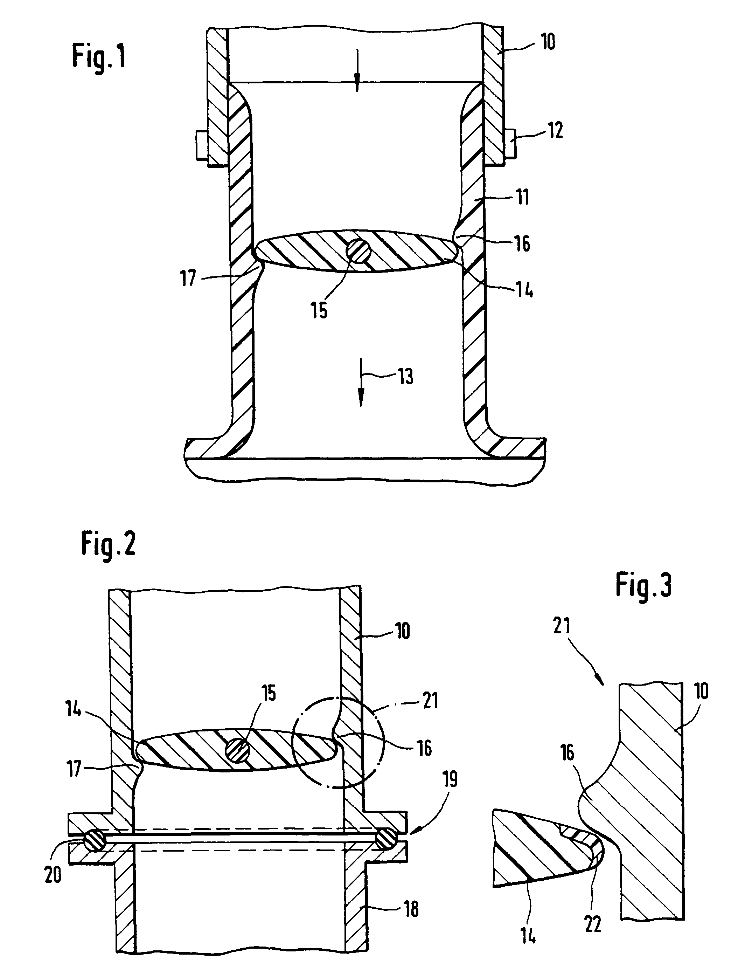

Figur 1 eine Drosselklappe, die in eine Sauganlage integriert ist
- Figur 1: eine Drosselklappe, die in eine Sauganlage integriert ist
- Figur 2: eine Drosselklappe, welche in einen Luftfilter-Reinluftkanal integriert ist
- Figur 3: eine Drosselklappe mit integriertem Dichtelement in einer Detaildarstellung
- Figur 4a,b: die Detaildarstellung einer Drosselklappe während eines Relaxationsvorgangs
- Figur 5: die Detaildarstellung einer Drosselklappe mit Toleranzausgleich.
- Figur 6: eine Drosselklappe in einer Schnittdarstellung mit Elastomerdichtflächen

Figur 1 zeigt das Reinluftrohr 10 eines Luftfilters für eine Brennkraftmaschine. Dieses Reinluftrohr nimmt z.B. über eine Flanschverbindung den Anschlußstutzen eines Kunststoffsaugrohrs 11 auf. Die Flanschverbindung besteht z.B. aus einem Klemmring 12 und ist hier nur andeutungsweise dargestellt. Die dem Motor zuzuführende Reinluft strömt gemäß dem Pfeil 13 bei geöffneter Drosselklappe 14 in das Kunststoffsaugrohr ein. Die Drosselklappe 14 ist an einer Drosselklappenwelle 15 gelagert und liegt im geschlossenen Zustand an wulstartigen Dichtflächen 16, 17 auf. Während die Drosselklappe 14 aus Kunststoff hergestellt ist, kann die Drosselklappenwelle 15, welche beispielsweise auch zweigeteilt sein kann und als Steckwelle ausgebildet ist, in Metall oder ebenfalls in Kunststoff ausgeführt sein.

Die Kunststoffsauganlage 11 ist beispielsweise in Schmelzkerntechnologie oder Halbschalen-Spritzgußtechnik hergestellt, wobei der Schmelzkern im Dichtflächenbereich 16, 17 endet und über einen Kernzug der obere Teil des Kunststoffsaugrohrs hergestellt ist.

In Figur 2 ist die Drosselklappe 14 in das Reinluftrohr 10 integriert. Die Drosselklappe ist in aerodynamisch optimaler Taschenuhrform gestaltet, möglich sind auch andere Geometrien, wie z.B. Kragarm-Propeller- oder Mittelrippenklappen. Hierzu ist das Reinluftrohr mit den Dichtflächen 16, 17 versehen. Die Sauganlage 18 ist über eine Flanschverbindung 19 mit einem Dichtring 20 mit dem Reinluftrohr 10 verbunden. Die Dichtflächen 16, 17 an dem Reinluftrohr lassen sich mit geeigneten Kernzügen mit hoher Genauigkeit herstellen. Auch bei dieser Bauweise ist die Drosselklappenwelle 15 eine geteilte Steckwelle, welche eine einfache Montage der Drosselklappe in das Reinluftrohr 10 ermöglicht, welches z.B. auch ein Elastomerteil sein kann.

In Figur 3 ist das Detail 21 aus Figur 2 in einer vergrößerten Darstellung wiedergegeben. Die Dichtfläche 16 des Reinluftrohrs 10 steht in Kontakt mit einer in die Drosselklappe 14 integrierten Elastomerdichtung 22. Diese Elastomerdichtung kann in der 2K-Spritzgießtechnik hergestellt sein und ist damit besonders kostengünstig. Durch die Verwendung einer Elastomerdichtung werden extrem kleine Leckluftraten erzielt sowie ein Klappenklemmen verhindert. Selbstverständlich kann die Dichtung auch eine übliche, montierte Gummidichtung sein.

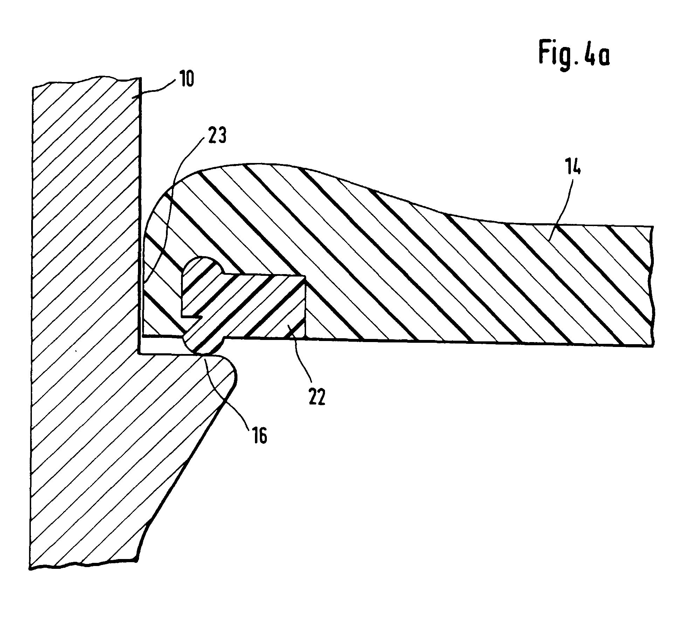

In Figur 4a ist ein Detail einer Drosselklappe 14 gezeigt. Diese ist in einem Reinluftrohr 10 angeordnet. An dem Reinluftrohr 10 ist eine Dichtfläche 16 vorgesehen, an welcher die Drosselklappe aufliegt. Zur zuverlässigen Abdichtung ist in die Drosselklappe 14 eine Elastomerdichtung 22 integriert. Die äußere Kontur der Drosselklappe im Bereich der Fläche 23 weist einen etwas geringeren Durchmesser auf als der Innendurchmesser des Reinluftrohres 10.

Zur Anpassung der Außenfläche 23 an die Kontur des Reinluftstutzens wird die Drosselklappe einem Temperierungsvorgang unterzogen. Hierzu wird eine Kraft F gemäß dem Pfeil 24 in Figur 4b erzeugt. Diese Kraft F wird im wesentlichen durch das Schwenken der Drosselklappe um den Schwenkpunkt der Drosselklappenwelle 15 gemäß Figur 2 gebildet. Aufgrund dieser Kraft und des Temperierungsvorgangs wird sich eine resultierende Bewegung längs des Pfeils SR einstellen bis die Fläche 23 der Drosselklappe an der unteren Kante sich an die Innenkontur des Drosselklappenstutzens angepaßt hat.

Selbstverständlich kann dieser Relaxationsvorgang auch mit anderen Mitteln erzielt werden, so z.B. durch Ultraschall oder andere elastizitätsmindernde Maßnahmen. Entscheidend ist dabei, daß eine Anpassung der Drosselklappe an die vorhandene Kontur erfolgt.

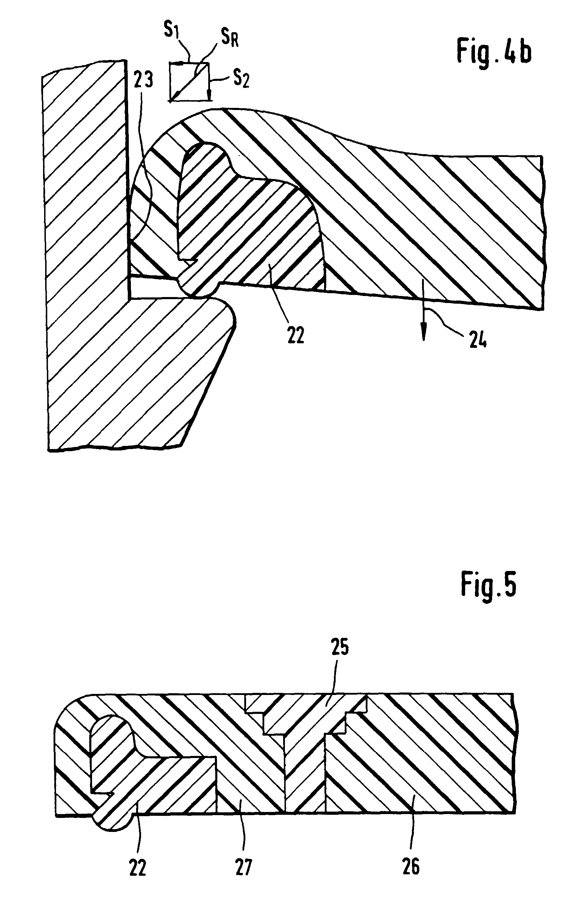

In Figur 5 ist eine weitere Detaildarstellung einer Drosselklappe gezeigt. In dieser Drosselklappe ist zum einen ein elastomeres Element 22 als Dichtungselement angeordnet. Weiterhin weist diese Drosselklappe ein zusätzliches Element 25 auf. Dieses hat die Aufgabe, eine Entkoppelung des Drosselklappenbereichs 26 zu dem Drosselklappenbereich 27 zu bewirken. Das Element 25 kann dabei ein Elastomer oder ein Kunststoff mit besonderen Fließeigenschaften sein. Während des Relaxationsvorgangs trägt dieses Entkoppelungselement zu einer besseren Anpassung der Drosselklappenkontur an die Kontur des Reinluftstutzens bzw. des Drosselklappenstutzens, der in dieser Zeichnung nicht dargestellt ist, bei. Auch das Element 25 kann im 2-K-Kunststoffspritzgießverfahren gemeinsam mit der Drosselklappe in einem Arbeitsgang hergestellt werden.

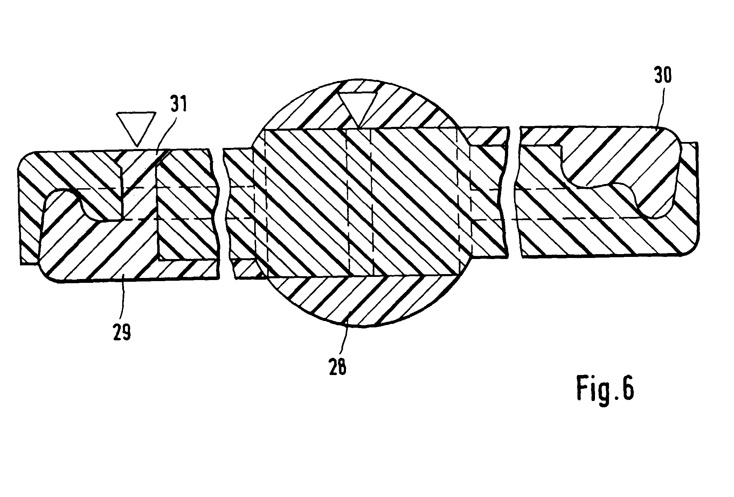

Die Drosselklappe gemäß Figur 6 ist in 2-K-Technik aufgebaut, d.h. in dem ersten Arbeitsgang wird der Körper 28 hergestellt, im zweiten Arbeitsgang werden die Dichtprofile 29, 30 innerhalb des gleichen Werkzeugs an den Körper 28 angespritzt. Damit das Einbringen des Elastomer oder des elastischen Kunststoffes in einfacher Weise von einer Stirnfläche der Drosselklappe aus erfolgen kann, ist, wie dargestellt, auf der linken Seite eine Einspritzöffnung 31 angeordnet. Durch diese Einspritzöffnung 31 wird die plastifizierte Masse für das Dichtelement 29 eingeführt. Auf der rechten Seite kann das plastifizierte Material von oben eingespritzt werden. Dieses Verfahren hat den Vorteil, daß aufwendige Einspritzkanäle nicht benötigt werden.

### Bezugszeichenliste

- 10: Reinluftrohr
- 11: Kunststoffsaugrohr
- 12: Klemmring
- 13: Pfeil
- 14: Drosselklappe
- 15: Drosselklappenwelle
- 16: Dichtfläche
- 17: Dichtfläche
- 18: Saugrohr
- 19: Flanschverbindung

- 20: Dichtring
- 21: Detail
- 22: Elastomerdichtung
- 23: Außenfläche
- 24: Pfeil
- 25: Element
- 26: Drosselklappenbereich
- 27: Drosselklappenbereich

## Patentansprüche

1. Drosseleinrichtung, insbesondere Drosselklappe in einem Ansaugkanal einer Brennkraftmaschine, die eine konzentrisch zu einer Mittelachse verlaufende Drosselklappenwelle (15) aufweist und wobei die Drosselklappe (14) sowie das sie umgebende Gehäuse einander zugewandte Dichtflächen (16, 17) aufweisen, dadurch gekennzeichnet, daß die Drosselklappe (14) aus Kunststoff besteht und unmittelbar in den reinluftseitigen Ausgangsstutzen des Luftfilters oder den Eingangsstutzen des Saugrohres (11) integriert ist, wobei die Anpassung der Drosselklappe (14) in eine im Ansaugkanal (10) der Brennkraftmaschine angeordnete Dichtebene durch eine Relaxation vorgenommen wird.

2. Drosseleinrichtung nach Anspruch 1, dadurch gekennzeichnet, daß das Saugrohr, in welches die Drosselklappe (14) integriert ist, aus Kunststoff besteht.

3. Drosseleinrichtung nach Anspruch 1 oder 2, dadurch gekennzeichnet, daß die Dichtflächen der Drosselklappe (14) mit einem Elastomer (22) versehen sind, welches in die Klappe integriert ist.

4. Drosseleinrichtung nach einem der vorhergehenden Ansprüche, dadurch gekennzeichnet, daß die Drosselklappenwelle (15) eine zweigeteilte Steckwelle ist.

5. Drosseleinrichtung nach Anspruch 1, dadurch gekennzeichnet, daß die Relaxation über einen Temperierungsvorgang erfolgt.

6. Drosseleinrichtung nach Anspruch 5, dadurch gekennzeichnet, daß der Temperiervorgang bei eingebauter Drosselklappe (14) in der Drosselklappen-Nullstellung erfolgt.

7. Drosseleinrichtung nach einem der vorhergehenden Ansprüche, dadurch gekennzeichnet, daß die Drosselklappe (14) und die in oder an der Drosselklappe (14) enthaltenen Komponenten (22) in 2-K-Kunststoffgießtechnik hergestellt ist.

8. Drosseleinrichtung nach einem der vorhergehenden Ansprüche, dadurch gekennzeichnet, daß die mit Elastomer versehenen Dichtflächen der Drosselklappe (14) mit wenigstens einer Einspritzöffnung versehen sind, wobei sich die Einspritzöffnung auf einer Stirnfläche der Drosselklappe (14) befindet.

## Claims

1. Throttle arrangement, more especially a throttle valve in an intake duct of an internal combustion engine, which arrangement has a throttle valve shaft (15) extending concentrically relative to a central axis, and wherein the throttle valve (14) and the housing surrounding it have sealing surfaces (16, 17) facing each other, characterised in that the throttle valve (14) is formed from plastics material and directly incorporated in the outlet connection of the air filter on the filtered air side or in the inlet connection of the induction manifold (11), the fitting of the throttle valve (14) into a sealing plane disposed in the intake duct (10) of the internal combustion engine being effected by relaxation.

2. Throttle arrangement according to claim 1, characterised in that the induction manifold, in which the throttle valve (14) is incorporated, is formed from plastics material.

3. Throttle arrangement according to claim 1 or 2, characterised in that the sealing surfaces of the throttle valve (14) are provided with an elastomer (22), which is incorporated in the valve.

4. Throttle arrangement according to one of the preceding claims, characterised in that the throttle valve shaft (15) is a stub shaft divided into two parts.

5. Throttle arrangement according to claim 1, characterised in that the relaxation is effected via a temperature controlling operation.

6. Throttle arrangement according to claim 5, characterised in that the temperature controlling operation is effected in the zero position of the throttle valve (14) when the throttle valve (14) is built-in.

7. Throttle arrangement according to one of the preceding claims, characterised in that the throttle valve (14) and the components (22), which are contained in or on the throttle valve (14), are produced by a 2-component plastics material moulding technique.

8. Throttle arrangement according to one of the preceding claims, characterised in that the sealing surfaces of the throttle valve (14), which are provided with elastomer, are provided with at least one injection port, the injection port being situated on an end face of the throttle valve (14).

## Revendications

1. Dispositif d'étranglement, en particulier clapet d'étranglement dans un canal d'admission d'un moteur à combustion interne qui présente un axe de clapet d'étranglement (15) s'étendant de façon concentrique par rapport à l'axe central, et dans lequel le clapet d'étranglement (14) ainsi que le boîtier qui l'entoure présentent des surfaces d'étanchéité (16, 17) tournées l'une vers l'autre,
caractérisé en, ce que
le clapet d'étranglement (14) est en matière plastique et est intégré directement dans l'ajutage de sortie du filtre à air, situé du côté de l'air purifié ou dans l'ajutage d'entrée du tuyau d'admission (11), l'adaptation du clapet d'étranglement (14) dans un plan d'étanchéité disposé dans la canal d'admission (10) du moteur à combustion interne étant réalisée par une relaxation.

2. Dispositif d'étranglement selon la revendication 1,
caractérisé en ce que
le tuyau d'admission dans le quel est intégré le clapet d'étranglement (14) est en matière plastique.

3. Dispositif d'étranglement selon la revendication 1 ou 2,
caractérisé en ce que
les surfaces d'étanchéité du clapet d'étranglement (14) sont pourvues d'un élastomère (22) qui est intégré dans le clapet.

4. Dispositif d'étranglement selon l'une des revendications précédentes,
caractérisé en ce que
l'axe (15) du clapet d'étranglement est un axe en deux parties qui s'enfile.

5. Dispositif d'étranglement selon la revendication 1, caractérisé en ce que
la relaxation a lieu au moyen d'un processus de mise en équilibre.

6. Dispositif d'étranglement selon la revendication 5,
caractérisé en ce que
le processus de mise en équilibre a lieu quand le clapet d'étranglement (14) est monté dans la position zéro du clapet d'étranglement.

7. Dispositif d'étranglement selon l'une des revendications précédentes,
caractérisé en ce que
le clapet d'étranglement (14) et les composantes (22) contenues dans le clapet d'étranglement (14) ou mises dessus sont fabriqués selon la technique de coulée par injection de matière plastique à deux composantes.

8. Dispositif d'étranglement selon l'une des revendications précédentes,
caractérisé en ce que
les surfaces d'étanchéité pourvues d'élastomère du clapet d'étranglement (14) sont pourvues d'au moins un orifice d'injection, l'orifice d'injection se trouvant sur une face frontale du clapet d'étranglement (14).
